# EUROPÄISCHE PATENTSCHRIFT

(11) **EP 2 848 133 B1**
(45) Veröffentlichungstag und Bekanntmachung des Hinweises auf die Patenterteilung: **30.05.2018**
(21) Anmeldenummer: 14176939.8
(22) Anmeldetag: 14.07.2014
(51) Int. Cl.: A24C 5/34

(54) **Anordnung und Verfahren zur Überprüfung von stabförmigen Artikeln der Tabak verarbeitenden Industrie**
Assembly and method for checking rod-shaped articles from the tobacco processing industry
Système et procédé de contrôle d'articles en forme de tige de l'industrie de traitement du tabac

(30) Priorität: 16.07.2013 DE 102013213936
(43) Veröffentlichungstag der Anmeldung: 18.03.2015
(73) Patentinhaber: Hauni Maschinenbau GmbH, 21033 Hamburg (DE)
(72) Erfinder: Koepke, Torsten, 22885 Barsbüttel-Willinghusen (DE); Schröder, Dierk, 22399 Hamburg (DE); Hohenstein, Norbert, 21481 Lauenburg (DE); Baron, Denis, 22457 Hamburg (DE); Leifels, Tobias, 20535 Hamburg (DE)
(74) Vertreter: Seemann & Partner Patentanwälte mbB

(56) Entgegenhaltungen:
- EP-A1- 1 013 182
- EP-A1- 1 739 411
- EP-A2- 2 762 015

## Beschreibung

Die Erfindung betrifft eine Anordnung zur Überprüfung von queraxial geförderten stabförmigen Artikeln der Tabak verarbeitenden Industrie, insbesondere zur Überprüfung von flüssigkeitsgefüllten Kapseln in Filtern von Filterzigaretten, mit wenigstens einer Muldenfördervorrichtung mit Mulden zur Aufnahme und queraxialen Förderung von stabförmigen Artikeln und wenigstens einer Mikrowellenmessvorrichtung mit wenigstens einem Mikrowellenresonator, eine Maschine der Tabak verarbeitenden Industrie sowie ein entsprechendes Verfahren. EP-A-2 762 015 (Stand der Technik nach Artikel 54(3) EPÜ) betrifft eine Anordnung und ein Verfahren zur Überprüfung von stabförmigen Artikeln der Tabak verarbeitenden Industrie. Bislang werden in einigen Filterstrangmaschinen, wie beispielsweise in der so genannten KDF der Anmelderin, Filterstäbe hergestellt, in die Objekte, beispielsweise geschmacksflüssigkeitsgefüllte Kapseln, eingelegt werden. Direkt während der Produktion werden diese Kapseln vor weiterer Verarbeitung geprüft, wobei insbesondere auch Mikrowellen-Sensoren wie die MIDAS-EF und MIDAS-EFX der Anmelderin zur Anwendung kommen. Dabei wird geprüft, ob der Füllgehalt der Kapseln korrekt ist oder ob diese zerbrochen sind, ob Kapseln fehlen, ob doppelte Kapseln eingelegt sind und ob die Position in der Strangrichtung korrekt ist.

In einigen Fällen werden die so produzierten Filterstäbe für eine gewisse Zeit, beispielsweise 24 Stunden, gelagert und anschließend entlang einer pneumatischen Förderstrecke noch einmal auf ihren Füllgehalt bzw. darauf, ob sie zerbrochen sind, geprüft. Dies geschieht beispielsweise in der mit "FDU" bezeichneten Anlage der Anmelderin, um auszuschließen, dass an der Filterstrangherstellungsmaschine Kapseln beschädigt worden sind, die erst nach einiger Zeit auslaufen und nur im ausgetrockneten Zustand vom Mikrowellen-Sensor als fehlerhaft detektiert werden.

Demgegenüber liegt der vorliegenden Erfindung die Aufgabe zugrunde, sicherzustellen, dass die Qualität der stabförmigen Artikel der Tabak verarbeitenden Industrie nach der vollständigen Bearbeitung sichergestellt wird.

Diese der Erfindung zugrunde liegende Aufgabe wird durch eine Anordnung zur Überprüfung von queraxial geförderten stabförmigen Artikeln der Tabak verarbeitenden Industrie, insbesondere zur Überprüfung von flüssigkeitsgefüllten Kapseln in Filtern von Filterzigaretten, gemäß Anspruch 1 gelöst. Die Erfindung beruht auf dem Grundgedanken, dass die Artikel, insbesondere Filterzigaretten, queraxial seitlich in den Mikrowellenresonator eintauchen und dort das darin angeregte resonante Mikrowellenfeld durchlaufen. Damit treten die überstehenden Abschnitte der stabförmigen Artikel vollständig in das Mikrowellenfeld ein, das im Resonator eine hohe Feldstärke aufweisen kann. Mit dem längserstreckten, einseitig offenen seitlichen Durchtrittskanal ist die Mikrowellenmessvorrichtung außerdem für diesen queraxial geförderten seitlich Durchtritt speziell ausgestaltet, um den entsprechenden Durchtritt durch den Mikrowellenresonator zu ermöglichen. Dieser Durchtrittskanal durchschneidet bzw. durchtritt auch den Mikrowellenresonator, der im Rahmen der Erfindung als der Hohlraum definiert ist, in dem sich das Mikrowellenresonanzfeld ausbildet, und der, bis auf Durchtrittsöffnungen für die stabförmigen Artikel, metallisch vom Mikrowellenresonatorgehäuse umgeben ist. Vorzugsweise durchqueren die überstehenden Abschnitte der Artikel, insbesondere die Kapseln, das Mikrowellenmessfeld in einem in der Längsachse der Artikel im Wesentlichen homogenen Bereich des Mikrowellenmessfelds.

Die erfindungsgemäße Maßnahme hat den Vorteil, dass Änderungen in der Dichte, beispielsweise eines Zigarettenfilters, oder in der Flüssigkeitsbefüllung einer flüssigkeitsbefüllten Kapsel im Zigarettenfilter sehr genau und weitgehend positionsunabhängig erfasst werden können. Dies erhöht die Messsicherheit für die Qualität der Filter bzw. der darin enthaltenen Kapseln.

Vorteilhafterweise ist eine Resonator-Schwingungsmode des Mikrowellen-Messfelds in dem wenigstens einen Mikrowellenresonator so gewählt, dass der Förderweg der Kapseln durch einen Schwingungsbauch verläuft, wobei insbesondere eine Oberwelle der Grundschwingung des Mikrowellenresonators eingestellt ist. In einem Schwingungsbauch ist das Mikrowellenresonanzfeld besonders homogen, so dass in diesem Fall sowohl eine maximale Feldstärke des Resonanzfeldes erreicht wird als auch eine bestmögliche Ortsunabhängigkeit. Die maximale Feldstärke im Schwingungsbauch ermöglicht eine besonders gute Messgenauigkeit, die dazu führt, dass im Schwingungsverlauf sich die Feldstärke nicht bzw. nur sehr graduell ändert. Dies sorgt dafür, dass diese Messgenauigkeit auch weitgehend unabhängig von der Kapselposition gewahrt ist.

In einer alternativen oder zusätzlichen Ausführung der Erfindung ist vorgesehen, dass wenigstens ein, insbesondere weiterer, Mikrowellenresonator in der Mikrowellenmessvorrichtung oder in einer weiteren Mikrowellenmessvorrichtung ebenfalls durch den oder einen Durchtrittskanal durchdrungen wird, wobei in dem, insbesondere weiteren, Mikrowellenresonator eine Resonator-Schwingungsmode eingestellt ist, die am Ort oder in der Nähe des Durchtritts der Kapseln durch den weiteren Mikrowellenresonator einen Schwingungsknoten aufweist.

In diesem Fall ist die Trajektorie, also der Förderweg der Kapsel, durch einen Schwingungsknoten oder in die Nähe eines Schwingungsknotens des Mikrowellenresonanzfeldes gelegt, so dass im Unterschied zu der Trajektorie, die durch einen Schwingungsbauch führt, nicht die Befüllung einer Kapsel im Vordergrund steht, sondern deren Positionierung. Bei einer vorteilhaften Positionierung läuft die Trajektorie der Kapsel in ihrer Sollposition durch den Schwingungsknoten, so dass das Mikrowellenfeld, das an dieser Stelle eine minimale Feldstärke aufweist, nur sehr wenig gestört wird, abgesehen von der schwächeren Beeinflussung durch das die Kapsel umgebende Filtermaterial. Eine stärkere Signaländerung bedeutet in dem Fall, dass die Kapsel nicht durch den Schwingungsknoten, sondern etwas versetzt zum Schwingungsknoten angeordnet ist, also nicht in der Sollposition. Soweit diese Sollposition verlassen ist, erfährt die Kapsel ein nicht verschwindendes Resonanzfeld und verschiebt daher die Resonanz, so dass ein messbares Signal auftritt, das allerdings nicht darauf sensitiv ist, in welcher Richtung ein Objekt von der Sollposition abweicht. Es kann beispielsweise ein Grenzwert für eine Signaländerung in dieser Ausführungsform der Anordnung definiert sein, oberhalb derer die Kapselfilterzigaretten ausgeschleust werden und nicht weiterverarbeitet werden.

Wenn die Trajektorie ebenfalls vorteilhafterweise in der Nähe eines Schwingungsknotens verläuft, ist es möglich, die Richtung einer Abweichung von der Sollposition zu ermitteln, da die Stärke des Signals in der Nähe eines Schwingungsknotens stark von der tatsächlichen Entfernung des Objekts vom Schwingungsknoten abhängt und mit steigender Entfernung vom Schwingungsknoten ansteigt. Eine Reduktion des Signals ist ein Hinweis darauf, dass es eine Abweichung von der Sollposition hin zum Schwingungsknoten gibt, ein größeres Signal weist auf eine weitere Entfernung vom Schwingungsknoten hin. Insofern bedeutet das Merkmal "in der Nähe eines Schwingungsknotens" im Rahmen der vorliegenden Erfindung einen Bereich abseits eines Schwingungsknotens, in dem die Feldstärke des Resonanzfeldes in wenigstens einer räumlichen Richtung stark inhomogen ist, im Gegensatz zu einem Schwingungsbauch, wo das Resonanzfeld vergleichsweise homogen ist. Vorzugsweise werden beide Ausführungsbeispiele gemeinsam verwendet, also werden die Trajektorien der Kapseln sowohl durch einen Schwingungsbauch eines Mikrowellenmessfeldes in einem Resonator und durch einen Schwingungsknoten in einem anderen Messfeld eines anderen Resonators geführt. Die beiden Mikrowellenresonatoren können Teil einer Mikrowellenmessvorrichtung sein oder in zwei Mikrowellenmessvorrichtungen angeordnet sein. Der Mikrowellenresonator ist als Hohlleiterresonator ausgebildet, der durch den Durchtrittskanal in zwei Teilräume geteilt ist, wobei ein Teilraum des Hohlleiterresonators mit einer Mikrowelleneinkopplung und der andere Teilraum mit einer induktiven oder kapazitiven Mikrowellenauskopplung verbunden ist, die jeweils durch eine Blende, insbesondere vorzugsweise zusätzlich mit einem Stub-Tuner oder einem Zweischeibentransformator, mit dem Hohlleiterresonator verbunden ist. Dabei ist der Durchtrittskanal in seinen Dimensionen vorzugsweise größer ausgebildet als ein Querschnitt des Hohlleiterresonators. Der Durchtrittskanal kann in einem solchen Fall beispielsweise die Form einer Gabel aufweisen, also einen "U"-förmigen Querschnitt aufweisen. Das Messgut wird dann durch die Gabel bzw. den Durchtrittskanal geleitet und verändert die Resonanzfrequenz und Güte bzw. Dämpfung des Hohlleiterresonators.

Der Abstand der Blenden bestimmt die Resonanzfrequenz des Hohlleiterresonators. Für eine hohe Messfeldstärke wird vorzugsweise ein Abstand der Blenden von einer halben oder einem Vielfachen einer halben Wellenlänge der Leerresonanzfrequenz gewählt.

Die Teilräume des Hohlleiterresonators sind vom Durchtrittskanal vorzugsweise mittels jeweils eines Staubschutzes, der für die Mikrowellen durchlässig ist, getrennt.

Unabhängig davon, ob der Mikrowellenresonator ein Hohlleiterresonator oder ein anderer Resonator ist, ist das elektrische Feld des Mikrowellenmessfelds vorzugsweise in Richtung einer Längsachse der stabförmigen Artikel und/oder in Förderrichtung der stabförmigen Artikel orientiert.

Die Orientierung des E-Felds (elektrischen Felds) in Richtung einer Längsachse der stabförmigen Artikel hat den Vorteil, dass er mit einem relativ kleinen Resonatorspalt in dieser Richtung realisiert werden kann. Eine Ausführung, in der das E-Feld in Förderrichtung der stabförmigen Artikel orientiert ist, hat den Vorteil, dass ein relativ kleiner Resonatorspalt in dieser Richtung möglich ist. Hierdurch ist auch die Ortsauflösung in Förderrichtung gut und eine Trennung von Messsignalen nacheinander geförderter stabförmiger Artikel, insbesondere Filterstäbe, möglich.

In einer vorteilhaften Weiterbildung ist vorgesehen, dass der wenigstens eine Mikrowellenresonator von dem Durchtrittskanal mittels eines im Mikrowellenresonator angeordneten nichtleitenden Fensters getrennt ist, das insbesondere den Durchtrittskanal an drei Seiten umgibt. Das nicht leitende Fenster schützt den Resonatorhohlraum vor Verschmutzung, beispielsweise durch die geförderten Zigaretten, behindert allerdings das resonante Mikrowellenmessfeld im Resonator nicht.

Wenn der Durchtrittskanal den Mikrowellenresonator in einem Bereich durchdringt, in dem der Mikrowellenresonator verjüngt ist, wobei der Mikrowellenresonator im verjüngten Bereich schmaler als der Durchmesser eines Artikels ist, ist eine gute Ortsauflösung in Förderrichtung der Artikel realisiert sowie eine hohe Feldstärke am Ort des Zentrums der stabförmigen Artikel.

Die Muldenfördervorrichtung ist vorzugsweise als Muldentrommel, als Muldenkegeltrommel oder als Muldenförderband ausgebildet.

Die der Erfindung zugrunde liegende Aufgabe wird auch durch eine Maschine der Tabak verarbeitenden Industrie, insbesondere Filteransetzmaschine, mit einer erfindungsgemäßen zuvor beschriebenen Anordnung gelöst. Die Maschine der Tabak verarbeitenden Industrie hat entsprechend die gleichen Merkmale, Vorteile und Eigenschaften wie die erfindungsgemäße Anordnung.

Ferner wird die der Erfindung zugrunde liegende Aufgabe auch durch ein Verfahren zur Überprüfung von queraxial geförderten stabförmigen Artikeln der Tabak verarbeitenden Industrie, insbesondere zur Überprüfung von flüssigkeitsgefüllten Kapseln in Filtern von Filterzigaretten, nach Anspruch 11 gelöst. Auch das erfindungsgemäße Verfahren beruht auf dem gleichen Grundgedanken wie die erfindungsgemäße Anordnung, dass die stabförmigen Artikel queraxial gefördert werden und ein Abschnitt über die jeweiligen Mulden, in denen sie gefördert werden, übersteht. Dieser überstehende Abschnitt wird durch einen längserstreckten, einseitig offenen seitlichen Durchtrittskanal der wenigstens einen Mikrowellenmessvorrichtung hindurch gefördert und durchquert auf seinem Förderweg durch den Durchtrittskanal den wenigstens einen Mikrowellenresonator.

Um eine besonders gute Messgenauigkeit zu Dichte, Feuchte und/oder Füllgrad von Kapseln zu erreichen, durchqueren die überstehenden Abschnitte, insbesondere mit den Soll-Positionen der Kapseln, das Mikrowellenmessfeld in einem in der Längsachse der Artikel im Wesentlichen homogenen Bereich des Mikrowellenmessfelds, insbesondere in einem Schwingungsbauch der eingestellten Resonator-Schwingungsmode.

Um eine hohe Ortsauflösung für die Abweichung von Kapseln von ihrer Kapsel-Sollposition zu erzielen, durchqueren die überstehenden Abschnitte, insbesondere mit den Soll-Positionen der Kapsel, das Mikrowellenmessfeld in oder nahe an einem Schwingungsknoten des Mikrowellenmessfelds, insbesondere in einer weiteren Mikrowellenmessvorrichtung.

Vorteilhafterweise wird ein Messsignal der wenigstens einen Mikrowellenmessvorrichtung auf das Vorhandensein und/oder eine Befüllung einer Kapsel in einem Filter ausgewertet.

Ebenfalls vorzugsweise werden Messsignale wenigstens einer Mikrowellenmessvorrichtung auf eine Positionierung einer Kapsel, insbesondere eine Exzentrizität einer Kapselposition, ausgewertet. Artikel, deren Kapseln eine nicht ordnungsgemäße Befüllung oder Positionierung aufweisen, werden vorzugsweise ausgeschleust, das heißt von der weiteren Bearbeitung ausgeschlossen bzw. gelangen nicht zu einer Packmaschine.

Auch das erfindungsgemäße Verfahren weist die gleichen Merkmale, Vorteile und Eigenschaften auf wie die erfindungsgemäße Anordnung.

Weitere Merkmale der Erfindung werden aus der Beschreibung erfindungsgemäßer Ausführungsformen zusammen mit den Ansprüchen und den beigefügten Zeichnungen ersichtlich.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: einen schematischen, aus dem Stand der Technik bekannten Verlauf einer Filterherstellung und Überprüfung,
- Fig. 2: schematisch einen Teil einer Muldentrommel,
- Fig. 3: schematisch eine Muldenkegeltrommel und
- Fig. 4 a)-d): schematische Darstellungen einer erfindungsgemäßen Mikrowellenmessvorrichtung und eines Feldverlaufs im Mikrowellenresonator,
- Fig. 5: eine schematische perspektivische Darstellung einer weiteren erfindungsgemäßen Mikrowellenmessvorrichtung,
- Fig. 6 a), b): Ersatzschaltkreise für die Mikrowellenmessvorrichtung gemäß Figur 5,
- Fig. 7 a), b): verschiedene perspektivische schematische Darstellungen und Schnittdarstellungen einer erfindungsgemäßen Mikrowellenmessvorrichtu ng,
- Fig. 8 a)-c): Mikrowellenmessfelder einer unbeladenen erfindungsgemäßen Mikrowellenmessvorrichtung gemäß Figur 5 in verschiedenen Schnittebenen und
- Fig. 9 a), b): Mikrowellenmessfeldverteilungen eines nicht erfindungsgemäßen und eines erfindungsgemäßen Mikrowellenresonators.

In den Zeichnungen sind jeweils gleiche oder gleichartige Elemente und/oder Teile mit denselben Bezugsziffern versehen, so dass von einer erneuten Vorstellung jeweils abgesehen wird.

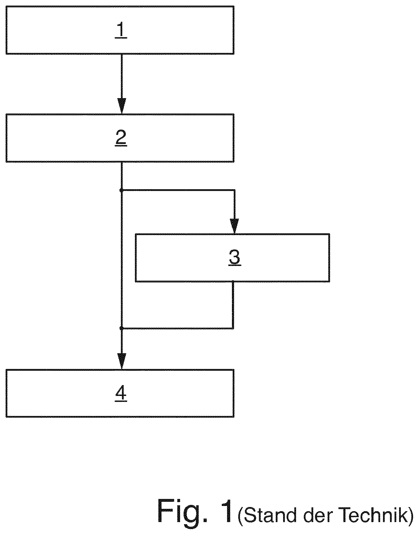

In Fig. 1 ist schematisch dargestellt, wie Filterstäbe mit Geschmackskapseln bislang hergestellt und Überprüft werden. Im Verfahrensschritt 1 werden Filterstäbe mit Geschmackskapseln auf einer Filterstrangvorrichtung, beispielsweise mit einem Filterstrang aus Azetat, hergestellt, beispielsweise auf einer Filterstrangmaschine gemäß der von der Anmelderin vertriebenen KDF. Direkt während der Produktion werden diese vor weiterer Verarbeitung mittels Mikrowellensensoren, beispielsweise der MIDAS-EF oder MIDAS-EFX der Anmelderin, daraufhin geprüft, ob Kapseln fehlen, eine doppelte Anzahl an einer Stelle eingebracht ist, ob eine Kapsel an falscher Position ist, ob eine Kapsel gebrochen ist oder einen irregulären Füllgehalt aufweist.

Anschließend werden die Kapseln optional und kundenabhängig 24 Stunden oder mehr gelagert und in einem Verfahrensschritt 2 in einer pneumatischen Fördervorrichtung, beispielsweise gemäß der "FDU" (Filter Detection Unit) der Anmelderin, die beispielsweise in der deutschen Patentanmeldung DE 10 2009 017 962 A1 der Anmelderin beschrieben ist, noch einmal überprüft. Hierbei werden wiederum der Füllgehalt und der Zerbrochen-Status geprüft, da an der Filterstrangmaschine Kapseln leicht beschädigt werden können, die erst nach einiger Zeit auslaufen und somit erst später im ausgetrockneten Zustand vom Mikrowellensensor als fehlerhaft detektiert werden können. Auch diese Mikrowellenvorrichtung entspricht beispielsweise der MIDAS-EF, also einem zylindrischen Mikrowellenresonator mit zentralem Durchgang für längsaxial geförderte Filterstäbe, wie er beispielsweise aus DE 198 54 550 B4 bekannt ist.

Optional erfolgt in einem Verfahrensschritt eine Multifilterherstellung, bei der kapselgefüllte Filterstopfen mit anderen Filterstopfen zusammen zu einem Multifilterstab zusammengestellt werden. Auch hier können die Kapseln beschädigt werden und gegebenenfalls über eine längere Zeit austrocknen.

In einigen Fällen ist aus Mangel an entsprechenden Einrichtungen beim Hersteller die Prüfung im Verfahrensschritt 2 nicht möglich.

Nach dem Verfahrensschritt 2 und optional dem Verfahrensschritt 3 wird in einem Verfahrensschritt 4 auf einer Filteransetzmaschine, beispielsweise der unter der Bezeichnung "MAX" der Anmelderin vertriebenen Maschine, der jeweilige Filter mit einem Tabakstab zusammengestellt und verbunden. An dieser Stelle und später erfolgt derzeit keine Prüfung der kapselbesetzten Filter. Es besteht allerdings eine gewisse Wahrscheinlichkeit, dass auch während der Zigarettenherstellung und in folgenden Verarbeitungsschritten Kapseln beschädigt werden, so dass diese auslaufen und beim Endkunden keinen Geschmackseffekt entfalten und es somit zu Reklamationen kommt. Dieses Risiko steigt mit Zunahme der Verarbeitungsschritte, wie zum Beispiel bei der Herstellung und Weiterverarbeitung von Multifiltern.

Eine Prüfung auf einer Zigarettenmaschine am letztmöglichen Prüfzeitpunkt vor dem Verpacken gibt es derzeit nicht. Die MIDAS-Messvorrichtungen mit zentral durchsetzten zylindrischen Resonatoren gemäß beispielsweise DE 198 54 550 B4 sind hierzu auch nicht eingerichtet.

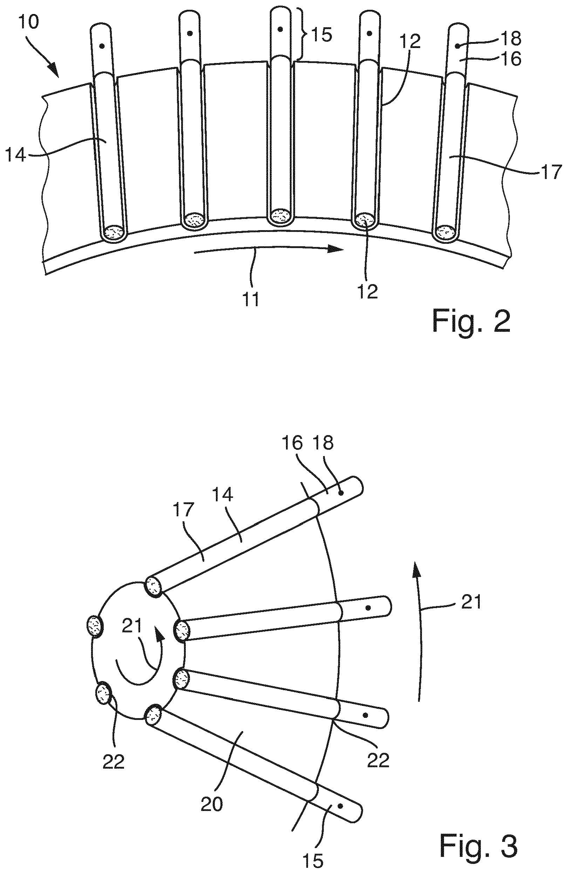

In Fig. 2 ist eine Muldenfördervorrichtung in Form einer Muldentrommel 10 ausschnittsweise dargestellt, an deren zylindrischer Oberfläche eine Abfolge von Mulden 12 angeordnet ist, die mit Saugluft (nicht dargestellt) Zigaretten 14 halten. Die Muldentrommel 10 bewegt die Zigaretten 14 in einer Förderrichtung 11, die mit einem Pfeil dargestellt ist. Die Zigaretten 14 bestehen aus einem Tabakstock 17, der größtenteils in jeweils einer Mulde 12 gehalten ist, an dem ein Filter 16 mit einer darin eingelegten Kapsel 18 angesetzt ist. Ungefähr im Bereich des Übergangs vom Tabakstock 17 zum Filter 16 enden die Mulde 12 und die Muldentrommel 10, so dass ein Abschnitt 15 der Zigarette 14 über die Mulde 12 übersteht und frei gefördert wird. Diese Abschnitte 15 der Zigaretten 14 durchlaufen im Folgenden eine erfindungsgemäße Messvorrichtung.

In Fig. 3 ist eine alternative Ausführungsform einer Muldenfördervorrichtung dargestellt in Form einer Muldenkegeltrommel 20 mit einem im Wesentlichen frustrokonischen Umfang. Die Muldenkegeltrommel 20 dreht sich in einer Förderrichtung 21 und weist an ihrer äußeren Umfangsfläche wiederum Mulden 22 auf, in denen Zigaretten 14 mittels Saugluft (nicht dargestellt) gehalten werden. Auch in diesem Fall tauchen die überstehenden Abschnitte 15 der Zigaretten 14 in eine nicht dargestellte erfindungsgemäße Messvorrichtung ein.

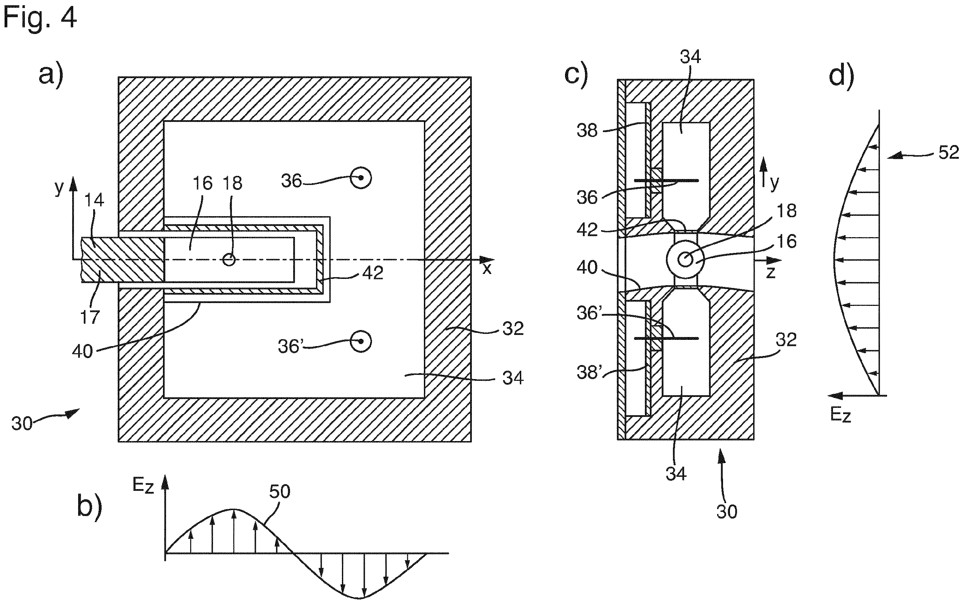

Eine solche Vorrichtung ist in Fig. 4 im Detail schematisch dargestellt. Die Mikrowellenmessvorrichtung 30, die in Figur 4a) in einem zentralen Querschnitt dargestellt ist, umfasst ein Resonatorgehäuse 32, das einen Mikrowellenresonator 34 umschließt. Der Mikrowellenresonator 34 ist ein Hohlraum, der von elektrisch leitenden Wänden des Resonatorgehäuses 32 umschlossen ist und in dem sich ein Mikrowellenmessfeld ausbilden kann. Zur Ein- und Auskoppelung des Mikrowellenmessfelds sind Antennen 36, 36' vorgesehen, die von der Seite her in den Mikrowellenresonator 34 hineinragen.

In den Figuren 4a) und 4c) sind außerdem Teile eines Koordinatensystems mit einer x-Achse, einer y-Achse und einer z-Achse dargestellt. Die x-Achse verläuft in Richtung der Längserstreckung der stabförmigen Artikel 14 bzw. Zigaretten 14, die z-Richtung verläuft in Förderrichtung der stabförmigen Artikel 14, während die y-Richtung senkrecht dazu steht. In Fig. 4a) ist daher ein Schnitt in einer x-y-Ebene dieses Koordinatensystems dargestellt.

In der y-Richtung weist das Resonatorgehäuse 32 zentral eine seitliche Öffnung auf, die als Durchtrittskanal 40 für die Zigaretten 14 fungiert. Dieser Durchtrittskanal 40 erstreckt sich in z-Richtung, die in Fig. 4a) in die Zeichenebene hinein verläuft. Der Durchtrittskanal 40 ist von dem Innenraum des Mikrowellenresonators 34 durch ein nichtleitendes Fenster 42, das den Durchtrittskanal 40 an drei Seiten umschließt, getrennt, so dass kein Staub und keine Verunreinigung aus dem Durchtrittskanal 40 beispielsweise von den Zigaretten 14 in den Mikrowellenresonator 34 eindringen können.

In Fig. 4b) unterhalb von Fig. 4a) ist der Verlauf eines typischen Mikrowellenresonanzfeldes in Abhängigkeit von der x-Richtung gezeigt. Das E-Feld 50, dessen elektrisches Feld E_{z} in z-Richtung orientiert ist, weist in dem dargestellten Ausführungsbeispiel dabei in x-Richtung zwei Wellenbäuche und einen mittigen Wellenknoten auf. In diesem Fall sind die beiden Antennen 36, 36' in x-Richtung an einer x-Position eines der beiden Wellenbäuche angeordnet, so dass eine ideale Ein- und Auskopplung des Mikrowellenmessfeldes durch die beiden Antennen 36, 36' erfolgt. Alternativ sind auch andere Einkopplungsorte sowie beispielsweise eine magnetische Einkopplungen möglich. Der andere Wellenbauch befindet sich in x-Richtung an einer Soll-Position der Kapsel 18 in Filter 16 der Zigaretten 14. Kapseln, die im Bereich des Wellenbauches angeordnet sind, erzeugen daher ein großes Signal bezüglich der Veränderung des resonanten Mikrowellenmessfeldes, so dass deren Befüllung und Qualität sehr genau messbar sind.

In einer alternativen Ausbildung könnte auch diese Position der Kapsel 18 an eine Stelle gesetzt sein, an der das Mikrowellenmessfeld einen Wellenknoten aufweist. In diesem Fall ergibt sich eine Änderung des Mikrowellenmessfeldes nur, falls die Kapsel 18 diese Sollposition nicht einnimmt und somit ein elektrisches Feld verspürt, das nicht gleich Null ist, also nicht die verschwindende Feldstärke des Wellenknotens aufweist. Dabei wird eine Differenz zu einer Signaländerung betrachtet, die von Filtermaterial ohnehin verursacht wird.

Fig. 4c) zeigt einen Querschnitt durch die Mikrowellenmessvorrichtung 30 in einer y-z-Ebene. Es ist zu erkennen, dass der Mikrowellenresonator 34 im zentralen Bereich verjüngt ist. Die Durchschneidung des Mikrowellenresonators 34 durch den Durchtrittskanal 40 ist in dieser Ansicht gut erkennbar. Ebenfalls ist erkennbar, dass der Durchtrittskanal 40 entsprechend der Krümmung des Förderwegs der Zigaretten 14 auf einer Muldentrommel 10 wie in Fig. 2 gekrümmt verläuft.

Im oberen Bereich ist zu erkennen, dass eine Antenne 36 durch einen nicht leitenden Abschnitt der Resonatorwand 40 hindurchgeführt ist und mit einer Elektronik 38 in Kontakt steht, die dafür in das Resonatorgehäuse eingelassen ist. Diese Elektronik 38 kann beispielsweise eine Sendeelektronik sein, die das Mikrowellenmessfeld erzeugt und durch die Antenne 36 in den Mikrowellenresonator 34 einkoppelt. Im unteren Bildbereich ist zu erkennen, dass in einer gleichartigen Konfiguration die Antenne 36' ebenfalls mit einer Elektronik 38' außerhalb des Mikrowellenresonators 34 verbunden ist. Hierbei kann es sich um eine Mess- und Auswerteelektronik 38' handeln, die Änderungen des Messfelds registriert und auswertet. Bei der Antenne 36' handelt es sich somit um eine Auskoppelantenne.

In Fig. 4d) ist dargestellt, wie das elektrische Feld 52 (E_{z}) sich in y-Richtung erstreckt. In dieser Richtung handelt es sich um die Null-Mode, die nur einen Wellenbauch aufweist und Schwingungsknoten an den äußeren Wänden. Auch in diesem Fall verläuft somit die Trajektorie der Kapseln 18 hinsichtlich ihrer Sollposition durch einen Wellenbauch des E-Felds.

Wie den Figuren 4b) und 4d) zu entnehmen ist, handelt es sich somit bereits um eine Oberschwingung der Grundmode, da in x-Richtung zwei Wellenbäuche und in y-Richtung ein Wellenbauch vorhanden sind.

Auch in y-Richtung könnte das Mikrowellenmessfeld mit einer höheren Mode gewählt werden, so dass die Trajektorie der Kapsel 18 an ihrer Sollposition durch einen Schwingungsknoten verlaufen könnte, um eine Ortsauflösung für Abweichungen von der Sollposition zu erreichen.

Die erfindungsgemäße Anordnung und das erfindungsgemäße Verfahren sind sowohl bereits nach dem Ansetzen von Filtern an Tabakstöcken oder an Filterstöcken an einer Filteransetzmaschine anwendbar, aber auch in einer Packungsmaschine, in der die Filterzigaretten, die zuvor produziert worden waren und für eine bestimmte Zeit, beispielsweise 24 Stunden, gelagert worden waren, zusammengestellt und in Zigarettenpackungen verpackt werden. In der zuletzt genannten Variante ist es möglich, auch solche defekten Kapseln als defekt zu erkennen, die bei der Herstellung so leicht beschädigt worden sind, dass sie nur sehr langsam auslaufen und ihre Flüssigkeit verlieren. Ein solcher Vorgang ist nach der üblichen Lagerzeit abgeschlossen.

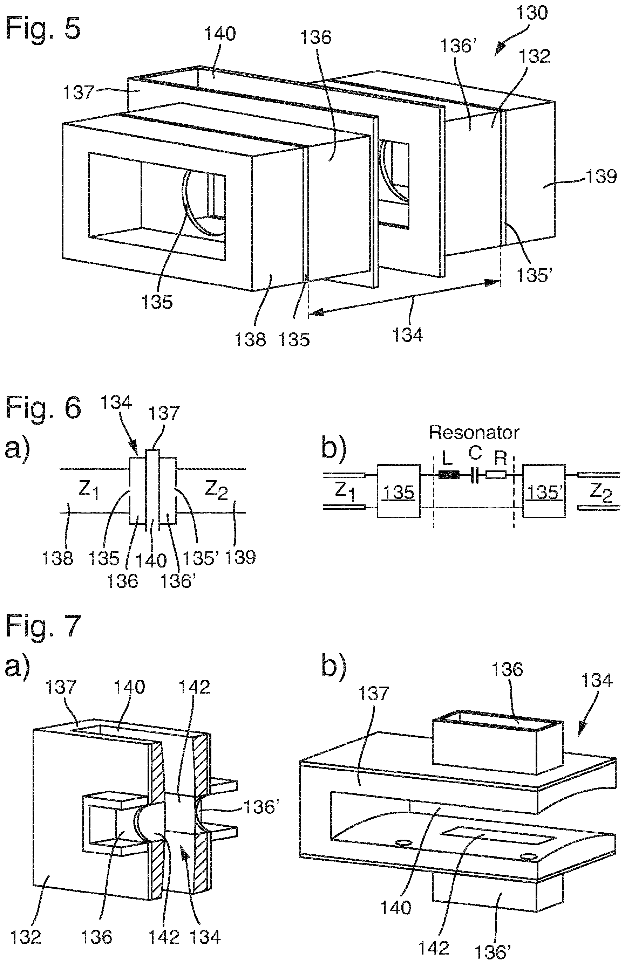

Figur 5 zeigt schematisch in einer perspektivischen Darstellung eine weitere erfindungsgemäße Mikrowellenmessvorrichtung 130, die als Mikrowellenresonator einen Hohlleiterresonator 134 aufweist. Das gemeinsame Resonatorgehäuse 132 beherbergt eine Mikrowelleneinkopplung 138, die mittels einer Blende 135 mit einer im Ausführungsbeispiel kreisförmigen Öffnung vom Hohlleiterresonator 134 abgetrennt ist, sowie eine Mikrowellenauskopplung 139, die durch eine weitere Blende 135' von dem Hohlleiterresonator 134 abgetrennt ist. Es sind auch Blenden mit ovalen oder anderen Öffnungen möglich, abhängig von den gewählten Bedingungen, Moden u.a. Die Erstreckung des Hohlleiterresonators 134 ist in Figur 5 durch einen Doppelpfeil angedeutet.

Der Hohlleiterresonator 134 ist durch einen Durchtrittskanal 140 in Form einer Gabel 137 in zwei Teilräume 136,136' aufgeteilt, die jedoch einen gemeinsamen Resonator 134 bilden.

Ein Mikrowellenfeld, das durch eine nicht dargestellte Mikrowellenantenne oder eine anderweitige induktive oder kapazitive Einkopplung in die Mikrowelleneinkopplung 138 eingekoppelt wird, gelangt impedanz angepasst durch die Blende 135 in den Hohlleiterresonator 134 und durch die zweite Blende 135' deren kreisförmige Öffnung in Figur 5 ebenfalls angedeutet ist, in die Mikrowellenauskopplung 139, in der eine weitere, nicht dargestellte, Antenne oder andere induktive oder kapazitive Einkopplung angeordnet ist.

Die nicht eingezeichnete Förderebene der queraxial geförderten stabförmigen Artikel verläuft in der Perspektive der Figur 5 von oben nach unten durch den Durchtrittskanal 140. Die Gabel 137 ist zu den Seiten, also quer zu der Hauptrichtung des Hohlleiterresonators, breiter ausgestaltet, als der Querschnitt des Hohlleiterresonators 134 selber. Dies führt dazu, dass das Mikrowellenmessfeld stärker im Hohlleiterresonator 134 konzentriert bleibt und ein Ausdringen des Mikrowellenmessfeldes aus dem Hohlleiterresonator 134 durch den Durchtrittskanal 140 klein gehalten wird.

In Figur 6 ist ein Ersatzschaltbild des Hohlleiterresonators 134 dargestellt. Figur 6a) zeigt einen Querschnitt durch die Mikrowellenmessvorrichtung 130 aus Figur 5 in stark schematisierter Darstellung mit einer ersten Impedanz Z₁ der Mikrowelleneinkopplung 138, den Resonator 134 mit Durchtrittskanal 140 und die Mikrowellenauskopplung 139 mit einer Impedanz Z₂. In Figur 6b) ist gezeigt, dass der Resonator ein verlustbehafteter Serienresonanzkreis ist, wobei L, C und R die Induktion, Kapazität und den Widerstand dieses Serienresonanzkreises bedeuten, wobei sich deren Werte mit Einprägung eines zu prüfenden stabförmigen Artikels, insbesondere Filter mit Kapseln, ändern.

Die Blenden 135, 135' sorgen für eine Ankopplung der Mikrowelleneinkopplung und der Mikrowellenauskopplung an den Resonator 134.

In Figur 7 sind in den Teilfiguren a) und b) zwei unterschiedliche Ansichten eines entsprechenden Hohlleiterresonators 134 gezeigt. Figur 7a) zeigt dabei einen Schnitt quer durch den Resonator 134 und die Gabel 137, der die Förderbahn der nicht dargestellten queraxial geförderten Artikel umfasst. Dabei sind auch die nicht leitenden Fenster 142 erkennbar, die den Durchtrittskanal 140 von den Teilräumen 136, 136' des Hohlleiterresonators 134 trennen und vor Eindringen von Staub schützen.

Figur 7b) zeigt eine weitere perspektivische Ansicht des Hohlleiterresonators 134 mit Gabel 137, wobei in den Durchtrittskanal 140 hineingesehen wird. Es ist erkennbar, ebenso wie in dem Schnitt der Figur 7a), dass der Duchtrittskanal 140 einen Bogenabschnitt beschreibt, entsprechend dem Förderweg auf einer Muldentrommel oder Muldenkegeltrommel.

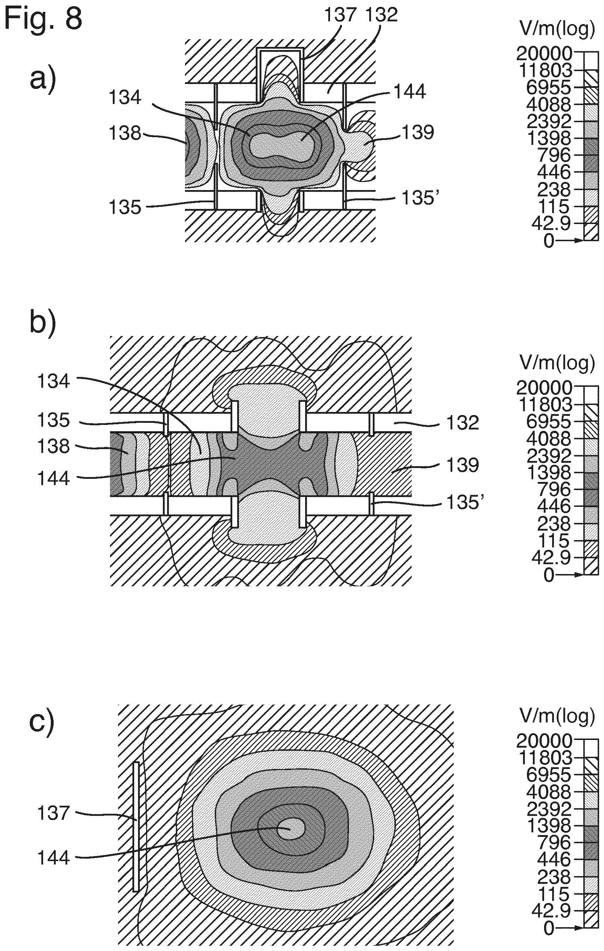

Figur 8 stellt die Verteilung eines Mikrowellenmessfeldes 144 in einem erfindungsgemäßen Hohlleiterresonator 134 gemäß Figur 5 bis 7 dar. Figur 8 a) zeigt dabei einen Schnitt, der durch das Zentrum des Hohlleiterresonators 134 und senkrecht zur Förderrichtung der stabförmigen Artikel ist. Der Hohlleiterresonator 134 ist unbeladen. Das Mikrowellenmessfeld wird in der Mikrowelleneinkopplung 138 eingespeist, tritt durch die Blende 135 in den Hohlleiterresonator 134 ein und hat dort eine Verteilung, die ein Maximum im Zentrum des Hohlleiterresonators 134 hat. Das Mikrowellenmessfeld 144 tritt durch die Blende 135' in die Mikrowellenauskopplung 139 in einem vorbestimmten, geringeren Maße aus.

In Figur 8b) ist für das gleiche Mikrowellenmessfeld 144 ein Schnitt gezeigt, der senkrecht zu dem Schnitt aus Figur 8a) steht und in dessen Ebene auch die Förderrichtung der stabförmigen Artikel liegt. Es ist erkennbar, dass die Feldverteilung ähnlich ist wie in der Figur 8a), wobei ein geringes Auslecken des Mikrowellenmessfeldes 144 zu den beiden offenen Seiten, durch die die stabförmigen Artikel mit ihren überstehenden Abschnitten hindurchtreten, festzustellen ist.

Der Schnitt aus Figur 8c) liegt in der dritten Ebene. Der weiße Balken auf der linken Seite bezeichnet die Abschlusswand der Gabel 137. Die stabförmigen Artikel, die hier nicht dargestellt sind, liegen während ihrer Förderung ebenfalls in dieser Ebene und gelangen beispielsweise von oben nach unten durch das Feld. Es ist erkennbar, dass das Mikrowellenmessfeld 144 etwas asymmetrisch ist und durch die Rückwand der Gabel 137 etwas zurückgehalten wird, ansonsten sehr homogen ist.

Die Figur 8a) zeigt außerdem, dass der Durchtrittskanal 140 in diesem Ausführungsbeispiel einseitig geschlossen ist durch die Rückwand der Gabel 137.

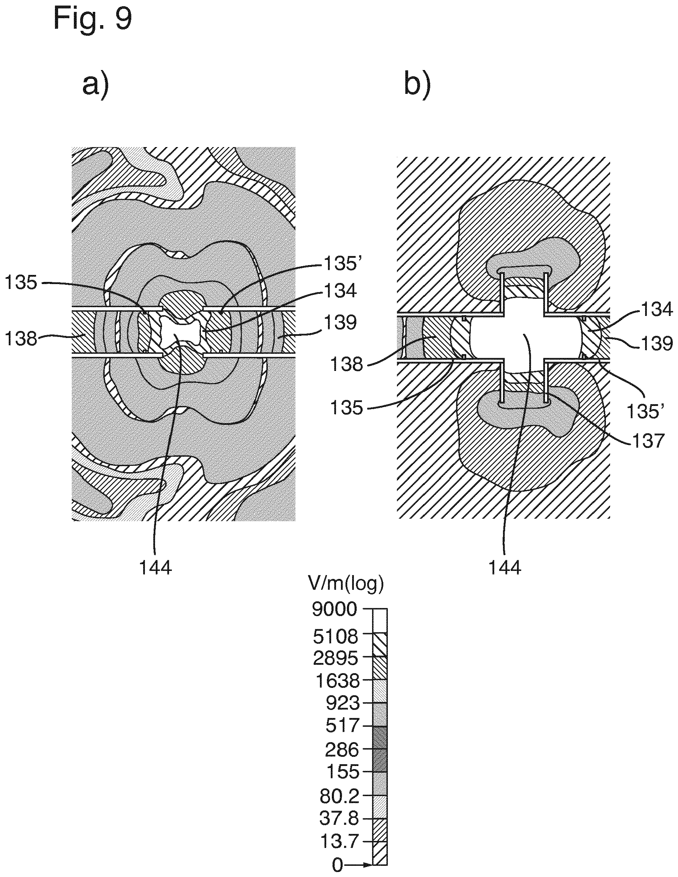

In Figur 9a) und 9b) ist der Effekt der überstehenden Abschnitte des Durchtrittskanals 140 auf das Mikrowellenmessfeld 144 gezeigt. Diese seitlich abstehenden Seitenwände der Gabel 137 halten das Mikrowellenmessfeld in Figur 9b) deutlich konzentrierter im Zentrum des Mikrowellenresonators, während in dem Fall ohne Gabel 137 ein starkes Austreten, wie in Figur 9a) dargestellt, zu verzeichnen ist. In der Graustufendarstellung der Figur 9 bezeichnet ein dunkler Wert im Resonator eine hohe Feldstärke, ein heller Wert eine mittlere Stufe und ein dunkler Wert außerhalb des Resonators eine geringe Feldstärke.

Die Gabel ist in diesen Beispielen in den Abmessungen größer als der Hohlleiterquerschnitt gewählt, so dass die Mikrowellenabstrahlung nach außen reduziert ist. Gleichzeitig verbessert sich die Resonanzgüte, was die Empfindlichkeit auf Änderungen des Kapselinhalts beispielsweise steigert. Auch die Kopplung zwischen Ein- und Ausgang der Messanordnung wird durch die Anwesenheit der Gabel verbessert, da die Abstrahlung vermindert wird.

### Bezugszeichenliste

- 1: Kapseleinsatz und erste Kapselprüfung
- 2: Kapselprüfung nach Lagerung
- 3: optionale Multifilterherstellung
- 4: Zigarettenherstellung
- 10: Muldentrommel
- 11: Förderrichtung
- 12: Mulde
- 14: Zigarette
- 15: überstehender Abschnitt der Zigarette
- 16: Filter
- 17: Tabakstock
- 18: Kapsel
- 20: Muldenkegeltrommel
- 21: Förderrichtung
- 22: Mulde
- 30: Mikrowellenmessvorrichtung
- 32: Resonatorgehäuse
- 34: Mikrowellenresonator
- 36, 36': Antenne
- 38, 38': Elektronik
- 40: Durchtrittskanal
- 42: nichtleitendes Fenster
- 50: E-Feld in x-Richtung
- 52: E-Feld in y-Richtung
- 130: Mikrowellenmessvorrichtung
- 132: Resonatorgehäuse
- 134: Hohlleiterresonator
- 135, 135': Blende
- 136, 136': Teilraum
- 137: Gabel
- 138: Mikrowelleneinkopplung
- 139: Mikrowellenauskopplung
- 140: Durchtrittskanal
- 142: nichtleitendes Fenster
- 144: Mikrowellenmessfeld

## Patentansprüche

1. Anordnung zur Überprüfung von queraxial geförderten stabförmigen Artikeln (14) der Tabak verarbeitenden Industrie, insbesondere zur Überprüfung von flüssigkeitsgefüllten Kapseln (18) in Filtern (16) von Filterzigaretten (14), mit wenigstens einer Muldenfördervorrichtung (10, 20) mit Mulden (12, 22) zur Aufnahme und queraxialen Förderung von stabförmigen Artikeln (14) und wenigstens einer Mikrowellenmessvorrichtung (30, 130) mit wenigstens einem Mikrowellenresonator (34, 134), wobei die wenigstens eine Mikrowellenmessvorrichtung (30, 130) entlang eines Förderweges der stabförmigen Artikel (14) wenigstens einen längserstreckten, einseitig offenen seitlichen Durchtrittskanal (40, 140) für einen über die jeweiligen Mulden (12, 22) überstehenden Abschnitt (15) der Artikel (14) aufweist, wobei der wenigstens eine Durchtrittskanal (40, 140) den wenigstens einen Mikrowellenresonator (34, 134) seitlich durchdringt, so dass überstehende Abschnitte (15) der stabförmigen Artikel (14) auf ihrem Förderweg durch den Durchtrittskanal (40, 140) ein Mikrowellenmessfeld (50, 52, 144) im wenigstens einen Mikrowellenresonator (34, 134) durchqueren, wobei die stabförmigen Artikel (14), insbesondere an einer Soll-Position der Kapseln (18), das Mikrowellenmessfeld (50, 52, 144) durchqueren, wobei der Mikrowellenresonator (134) als Hohlleiterresonator ausgebildet ist, der durch den Durchtrittskanal (140) in zwei Teilräume (136, 136') geteilt ist, wobei ein Teilraum (136) des Hohlleiterresonators (134) mit einer Mikrowelleneinkopplung (138) und der andere Teilraum (136') mit einer induktiven oder kapazitiven Mikrowellenauskopplung (139) verbunden ist, die jeweils durch eine Blende (135, 135') mit dem Hohlleiterresonator (134) verbunden ist, wobei die Teilräume (136, 136') fluchtend entlang einer Hauptrichtung des Hohlleiterresonators angeordnet sind, und wobei die Hauptrichtung quer zu einer Förderebene der stabförmigen Artikel verläuft.

2. Anordnung nach Anspruch 1, **dadurch gekennzeichnet, dass** die überstehenden Abschnitte (15) der Artikel (14), insbesondere die Kapseln (18), das Mikrowellenmessfeld (50, 52, 144) in einem in der Längsachse der Artikel (14) im Wesentlichen homogenen Bereich des Mikrowellenmessfelds (50, 52, 144) durchqueren und/oder eine Resonator-Schwingungsmode des Mikrowellen-Messfelds (50, 52, 144) in dem wenigstens einen Mikrowellenresonator (34, 134) so gewählt ist, dass der Förderweg der Kapseln (18) durch einen Schwingungsbauch verläuft, wobei insbesondere eine Oberwelle der Grundschwingung des Mikrowellenresonators (34, 134) eingestellt ist.

3. Anordnung nach Anspruch 1 oder 2, **dadurch gekennzeichnet, dass** wenigstens ein, insbesondere weiterer, Mikrowellenresonator in der Mikrowellenmessvorrichtung (30, 130) oder in einer weiteren Mikrowellenmessvorrichtung ebenfalls durch den oder einen Durchtrittskanal (40, 140) durchdrungen wird, wobei in dem, insbesondere weiteren, Mikrowellenresonator eine Resonator-Schwingungsmode eingestellt ist, die am Ort oder in der Nähe des Durchtritts der Kapseln durch den weiteren Mikrowellenresonator einen Schwingungsknoten aufweist.

4. Anordnung nach Anspruch 1, **dadurch gekennzeichnet, dass** die Mikrowelleneinkopplung (138) und die induktive oder kapazitive Mikrowellenauskopplung (139) jeweils zusätzlich mit einem Stub-Tuner oder einem Zweischeibentransformator mit dem Hohlleiterresonator (134) verbunden ist.

5. Anordnung nach Anspruch 4, **dadurch gekennzeichnet, dass** der Durchtrittskanal (140) in seinen Dimensionen größer ausgebildet ist als ein Querschnitt des Hohlleiterresonators (134).

6. Anordnung nach einem der Ansprüche 1 bis 5, **dadurch gekennzeichnet, dass** das elektrische Feld des Mikrowellenmessfelds (50, 52, 144) in Richtung einer Längsachse der stabförmigen Artikel (14) und/oder in Förderrichtung (11, 21) der stabförmigen Artikel (14) orientiert ist.

7. Anordnung nach einem der Ansprüche 1 bis 6, **dadurch gekennzeichnet, dass** der wenigstens eine Mikrowellenresonator (34, 134) von dem Durchtrittskanal (40, 144) mittels eines im Mikrowellenresonator (34, 134) angeordneten nichtleitenden Fensters (42, 142) getrennt ist, das insbesondere den Durchtrittskanal (40) an drei Seiten umgibt.

8. Anordnung nach einem der Ansprüche 1 bis 7, **dadurch gekennzeichnet, dass** der Durchtrittskanal (40) den Mikrowellenresonator (34) in einem Bereich durchdringt, in dem der Mikrowellenresonator (34) verjüngt ist, wobei der Mikrowellenresonator im verjüngten Bereich schmaler als der Durchmesser eines Artikels (14) ist.

9. Anordnung nach einem der Ansprüche 1 bis 8, **dadurch gekennzeichnet, dass** die Muldenfördervorrichtung (10, 20) als Muldentrommel (10), als Muldenkegeltrommel (20) oder als Muldenförderband ausgebildet ist.

10. Maschine der Tabak verarbeitenden Industrie, insbesondere Filteransetzmaschine, mit einer Anordnung nach einem der Ansprüche 1 bis 9.

11. Verfahren zur Überprüfung von queraxial geförderten stabförmigen Artikeln (14) der Tabak verarbeitenden Industrie, insbesondere zur Überprüfung von flüssigkeitsgefüllten Kapseln (18) in Filtern (16) von Filterzigaretten (14), insbesondere in einer Anordnung nach einem der Ansprüche 1 bis 9, wobei stabförmige Artikel (14), insbesondere Filterzigaretten (14), in Mulden (12, 22) wenigstens einer Muldenfördervorrichtung (10, 20) queraxial an wenigstens einer Mikrowellenmessvorrichtung (30, 130) mit wenigstens einem Mikrowellenresonator (34, 134) vorbei gefördert werden, wobei die stabförmigen Artikel (14) einen über die jeweiligen Mulden (12, 22) überstehenden Abschnitt (15) aufweisen, wobei die überstehenden Abschnitte (15) der Artikel (14) auf ihrem Förderweg wenigstens einen längserstreckten, einseitig offenen seitlichen Durchtrittskanal (40, 140) der wenigstens einen Mikrowellenmessvorrichtung (30, 130) durchqueren und auf ihrem Förderweg durch den Durchtrittskanal (40, 140) den wenigstens einen Mikrowellenresonator (34, 134) durchqueren, so dass die überstehenden Abschnitte (15) der stabförmigen Artikel (14) auf ihrem Förderweg durch den Durchtrittskanal (40, 140) ein Mikrowellenmessfeld (50, 52, 144) in dem wenigstens einen Mikrowellenresonator (34, 134) durchqueren, wobei die stabförmigen Artikel (14), insbesondere an einer Soll-Position der Kapseln (18), das Mikrowellenmessfeld (50, 52, 144) durchqueren, wobei der Mikrowellenresonator (134) als Hohlleiterresonator ausgebildet ist, der durch den Durchtrittskanal (140) in zwei Teilräume (136, 136') geteilt ist, wobei ein Teilraum (136) des Hohlleiterresonators (134) mit einer Mikrowelleneinkopplung (138) und der andere Teilraum (136') mit einer induktiven oder kapazitiven Mikrowellenauskopplung (139) verbunden ist, die jeweils durch eine Blende (135, 135') mit dem Hohlleiterresonator (134) verbunden ist, wobei die Teilräume (136, 136') fluchtend entlang einer Hauptrichtung des Hohlleiterresonators angeordnet sind, wobei die Hauptrichtung quer zu einer Förderebene der stabförmigen Artikel verläuft.

12. Verfahren nach Anspruch 11, **dadurch gekennzeichnet, dass** die überstehenden Abschnitte (15), insbesondere mit den Soll-Positionen der Kapseln (18), das Mikrowellenmessfeld (50, 52, 144) in einem in der Längsachse der Artikel (14) im Wesentlichen homogenen Bereich des Mikrowellenmessfelds (50, 52) durchqueren, insbesondere in einem Schwingungsbauch der eingestellten Resonator-Schwingungsmode.

13. Verfahren nach Anspruch 11 oder 12, **dadurch gekennzeichnet, dass**, insbesondere in einer weiteren Mikrowellenmessvorrichtung, die überstehenden Abschnitte (15), insbesondere mit den Soll-Positionen der Kapseln (18), das Mikrowellenmessfeld (50, 52, 144) in oder nahe an einem Schwingungsknoten des Mikrowellenmessfelds (50, 52) durchqueren.

14. Verfahren nach einem der Ansprüche 11 bis 13, **dadurch gekennzeichnet, dass** ein Messsignal der wenigstens einen Mikrowellenmessvorrichtung (30, 130) auf das Vorhandensein und/oder eine Befüllung einer Kapsel (18) in einem Filter (16) ausgewertet wird.

15. Verfahren nach einem der Ansprüche 11 bis 14, **dadurch gekennzeichnet, dass** Messsignale wenigstens einer Mikrowellenmessvorrichtung (30, 130) auf eine Positionierung einer Kapsel (22), insbesondere eine Exzentrizität einer Kapselposition, ausgewertet werden.

16. Verfahren nach einem der Ansprüche 11 bis 15, **dadurch gekennzeichnet, dass** Artikel (14), deren Kapseln (18) eine nicht ordnungsgemäße Befüllung oder Positionierung aufweisen, ausgeschleust werden.

## Claims

1. An arrangement for checking transverse-axially conveyed, rod-shaped articles (14) of the tobacco processing industry, in particular for checking fluid-filled capsules (18) in filters (16) of filter cigarettes (14), having at least one trough conveying device (10, 20) with troughs (12, 22) for receiving and transverse-axially conveying rod-shaped articles (14) and at least one microwave measuring device (30, 130) having at least one microwave resonator (34, 134), wherein the at least one microwave measuring device (30, 130) has, along a conveying path of the rod-shaped articles (14), at least one longitudinal lateral passage channel (40, 140) open at one end for a section (15) of the articles (14) protruding beyond the respective troughs (12, 22), wherein the at least one passage channel (40, 140) laterally penetrates the at least one microwave resonator (34, 134) so that protruding sections (15) of the rod-shaped articles (14), on their conveying path through the passage channel (40, 140), pass through a microwave measuring field (50, 52, 144) in the at least one microwave resonator (34, 134), wherein the rod-shaped articles (14), particularly at a target position of the capsules (18), pass through the microwave measuring field (50, 52, 144), wherein the microwave resonator (134) is designed as a waveguide resonator that is divided into two compartments (136, 136') by the passage channel (140), wherein one compartment (136) of the waveguide resonator (134) is connected to a microwave input unit (138) and the other compartment (136') is connected to an inductive or capacitive microwave output unit (139), which are each connected by a shutter (135, 135') to the waveguide resonator (134), wherein the compartments (136, 136') are arranged in alignment along a main direction of the waveguide resonator and wherein the main direction runs perpendicularly to a conveying plane of the rod-shaped articles.

2. The arrangement according to claim 1, **characterised in that** the protruding sections (15) of the articles (14), in particular the capsules (18), pass through the microwave measuring field (50, 52, 144) in an area of the microwave measuring field (50, 52, 144) that is essentially uniform in the longitudinal axis of the articles (14) and/or a resonator oscillation mode of the microwave measuring field (50, 52, 144) is selected in the at least one microwave resonator (34, 134) such that the conveying path of the capsules (18) runs through an antinode, wherein in particular a harmonic is adjusted to the fundamental frequency of the microwave resonator (34, 134).

3. The arrangement according to claim 1 or 2, **characterised in that** at least one, in particular another microwave resonator in the microwave measuring device (30, 130) or in another microwave measuring device is also penetrated by the passage channel or by a passage channel (40, 140), wherein a resonator oscillation mode having an oscillation node at or near the passage of the capsules through the other microwave resonator is created in the in particular other microwave resonator.

4. The arrangement according to claim 1, **characterised in that** the microwave input unit (138) and the inductive or capacitive microwave output unit (139) are each additionally connected by a stub tuner or a double disc transformer to the waveguide resonator (134).

5. The arrangement according to claim 4, **characterised in that** in terms of its dimensions, the passage channel (140) is designed larger than a cross section of the waveguide resonator (134).

6. The arrangement according to any one of claims 1 through 5, **characterised in that** the electric field of the microwave measuring field (50, 52, 144) is oriented in the direction of a longitudinal axis of the rod-shaped articles (14) and/or in the conveying direction (11, 21) of the rod-shaped articles (14).

7. The arrangement according to any one of claims 1 through 6, **characterised in that** the at least one microwave resonator (34, 134) is separated from the passage channel (40, 144) by means of a non-conducting window (42, 142) arranged in the microwave resonator (34, 134), which in particular surrounds the passage channel (40) on three sides.

8. The arrangement according to any one of claims 1 through 7, **characterised in that** the passage channel (40) penetrates the microwave resonator (34) in an area in which the microwave resonator (34) is tapered, wherein in the tapered area, the microwave resonator is narrower than the diameter of an article (14).

9. The arrangement according to any one of claims 1 through 8, **characterised in that** the trough conveying device (10, 20) is designed as a trough drum (10), as a trough cone drum (20), or as a trough conveyor belt.

10. A machine of the tobacco processing industry, in particular a filter attaching machine, having an arrangement according to any one of claims 1 through 9.

11. A method for checking transverse-axially conveyed rod-shaped articles (14) of the tobacco processing industry, in particular for checking fluid-filled capsules (18) in filters (16) of filter cigarettes (14), in particular in an arrangement according to any one of claims 1 through 9, wherein rod-shaped articles (14), in particular filter cigarettes (14), are conveyed in troughs (12, 22) of at least one trough conveying device (10, 20) transverse-axially past at least one microwave measuring device (30, 130) having at least one microwave resonator (34, 134), wherein the rod-shaped articles (14) have a section (15) protruding beyond the respective troughs (12, 22), wherein on their conveying path, the protruding sections (15) of the articles (14) pass through at least one longitudinal lateral passage channel (40, 140), which is open at one end, of the at least one microwave measuring device (30, 130) and, on their conveying path through the passage channel (40, 140), they pass through the at least one microwave resonator (34, 134) so that on their conveying path through the passage channel (40, 140), the protruding sections (15) of the rod-shaped articles (14) pass through a microwave measuring field (50, 52, 144) in the at least one microwave resonator (34, 134), wherein the rod-shaped articles (14), particularly at a target position of the capsules (18), pass through the microwave measuring field (50, 52, 144), wherein the microwave resonator (134) is designed as a waveguide resonator, which is divided by the passage channel (140) into two compartments (136, 136'), wherein one compartment (136) of the waveguide resonator (134) is connected to a microwave input unit (138) and the other compartment (136') is connected to an inductive or capacitive microwave output unit (139), which are each connected by a shutter (135, 135') to the waveguide resonator (134), wherein the compartments (136, 136') are arranged in alignment along a main direction of the waveguide resonator, wherein the main direction runs perpendicularly to a conveying plane of the rod-shaped articles.

12. The method according to claim 11, **characterised in that** the protruding sections (15), in particular with the target positions of the capsules (18), pass through the microwave measuring field (50, 52, 144) in an area of the microwave measuring field (50, 52) that is essentially uniform in the longitudinal axis of the articles (14), in particular in an antinode of the created resonator oscillation mode.

13. The method according to claim 11 or 12, **characterised in that**, in particular in another microwave measuring device, the protruding sections (15), in particular with the target positions of the capsules (18), pass through the microwave measuring field (50, 52, 144) in or near an oscillation node of the microwave measuring field (50, 52).

14. The method according to any one of claims 11 through 13, **characterised in that** a measurement signal of the at least one microwave measuring device (30, 130) is evaluated for the presence and/or a filling of a capsule (18) in a filter (16).

15. The method according to any one of claims 11 through 14, **characterised in that** measurement signals of at least one microwave measuring device (30, 130) are evaluated for a positioning of a capsule (22), in particular for an eccentricity of a capsule position.

16. The method according to any one of claims 11 through 15, **characterised in that** articles (14), the capsules (18) of which have an incorrect filling or positioning, are removed.

## Revendications

1. Système de contrôle d'articles en forme de tige (14) de l'industrie de traitement du tabac, les articles étant transportés dans le sens de leur axe transversal, notamment pour contrôler des capsules (18) remplies d'un liquide et se trouvant dans des filtres (16) de cigarettes à filtre (14), avec au moins un dispositif de transport à auges (10, 20) ayant des renfoncements en forme d'auge (12, 22) destinés à recevoir et à transporter dans le sens de leur axe transversal, des articles en forme de tige (14) et avec au moins un dispositif de mesure à micro-ondes (30, 130) ayant au moins un résonateur à micro-ondes (34, 134), ledit au moins un dispositif de mesure à micro-ondes (30, 130) comprenant, le long d'un chemin de transport des articles en forme de tige (14), au moins un canal de passage (40, 140) latéral ouvert d'un côté et s'étendant dans le sens longitudinal, pour une partie (15) de l'article (14) dépassant des renfoncements en forme d'auge (12, 22) respectifs, ledit au moins un canal de passage (40, 140) traversant ledit au moins un résonateur à micro-ondes (34, 134) latéralement, si bien que des parties (15) en dépassement des articles en forme de tige (14) traversent, sur leur chemin de transport à travers le canal de passage (40, 140), un champ de mesure à micro-ondes (50, 52, 144) dans ledit au moins un résonateur à micro-ondes (34, 134), les articles en forme de tige (14) traversant le champ de mesure à micro-ondes (50, 52, 144) à une position de consigne des capsules (18), le résonateur à micro-ondes (134) se présentant sous la forme d'un résonateur à guide d'ondes qui est divisé par le canal de passage (140) en deux volumes partiels (136, 136'), l'un (136) des volumes partiels du résonateur à guide d'ondes (134) étant relié à une entrée de micro-ondes (138) et l'autre volume partiel (136') étant relié à une sortie de micro-ondes inductive ou capacitive (139) dont chacune est reliée au résonateur à guide d'ondes (134) par un diaphragme (135, 135'), les volumes partiels (136, 136') étant disposés de façon alignée le long d'une direction principale du résonateur à guide d'ondes et la direction principale étant orientée transversalement à un plan de transport des articles en forme de tige.

2. Système selon la revendication 1, **caractérisé en ce que** les parties (15) en dépassement des articles (14), notamment les capsules (18), traversent le champ de mesure à micro-ondes (50, 52, 144) dans une zone du champ de mesure à micro-ondes (50, 52, 144) qui est sensiblement homogène dans l'axe longitudinal des articles (14) et/ou **en ce qu'**un mode d'oscillation de résonateur du champ de mesure à micro-ondes (50, 52, 144) dans ledit au moins un résonateur à micro-ondes (34, 134) est choisi de façon telle que le chemin de transport des capsules (18) passe par un ventre d'oscillation, étant précisé qu'il est ajusté notamment un harmonique de l'oscillation fondamentale du résonateur à micro-ondes (34, 134).

3. Système selon la revendication 1 ou 2, **caractérisé en ce qu'**un résonateur à micro-ondes, notamment un résonateur supplémentaire, dans le dispositif de mesure à micro-ondes (30, 130) ou dans un dispositif de mesure à micro-ondes supplémentaire, est également traversé par le ou par un canal de passage (40, 140), étant précisé qu'il est ajusté dans le résonateur à micro-ondes, notamment dans le résonateur supplémentaire, un mode d'oscillation de résonateur qui présente, à l'endroit ou proche de l'endroit de passage des capsules par le résonateur à micro-ondes supplémentaire, un noeud d'oscillation.

4. Système selon la revendication 1, **caractérisé en ce que** l'entrée de micro-ondes (138) et la sortie de micro-ondes inductive ou capacitive (139) sont reliées chacune au résonateur à guide d'ondes (134) en plus par un tuner à barre ou un transformateur à deux disques.

5. Système selon la revendication 4, **caractérisé en ce que** le canal de passage (140) présente des dimensions plus grandes qu'une section transversale du résonateur à guide d'ondes (134).

6. Système selon l'une des revendications 1 à 5, **caractérisé en ce que** le champ électrique du champ de mesure à micro-ondes (50, 52, 144) est orienté dans la direction d'un axe longitudinal des articles en forme de tige (14) et/ou dans la direction de transport (11, 21) des articles en forme de tige (14).

7. Système selon l'une des revendications 1 à 6, **caractérisé en ce que** ledit au moins un résonateur à micro-ondes (34, 134) est séparé du canal de passage (40, 140) par une fenêtre non conductrice (42, 142) disposée dans le résonateur à micro-ondes (34, 134) et qui, notamment, entoure le canal de passage (40) sur trois côtés.

8. Système selon l'une des revendications 1 à 7, **caractérisé en ce que** le canal de passage (40) traverse le résonateur à micro-ondes (34) dans une zone dans laquelle le résonateur à micro-ondes (34) est rétréci, dans la zone rétrécie, le résonateur à micro-ondes étant moins large que le diamètre d'un article (14).

9. Système selon l'une des revendications 1 à 8, **caractérisé en ce que** le dispositif de transport à auges (10, 20) est configuré comme tambour à renfoncements en forme d'auge (10) ou comme tambour conique à renfoncements en forme d'auge (10) ou comme bande transporteuse à renfoncements en forme d'auge.

10. Machine de l'industrie de traitement de tabac, notamment machine de pose de filtre, avec un système selon l'une des revendications 1 à 9.

11. Procédé de contrôle d'articles en forme de tige (14) de l'industrie de traitement du tabac, les articles étant transportés dans le sens de leur axe transversal, notamment pour contrôler des capsules (18) remplies d'un liquide et se trouvant dans des filtres (16) de cigarettes à filtre (14), notamment dans un système selon l'une des revendications 1 à 9, des articles en forme de tige (14), notamment des cigarettes à filtre (14), étant passés, dans le sens de leur axe transversal, dans des renfoncements en forme d'auge (12, 22) d'au moins un dispositif de transport à auges (10, 20), devant au moins un dispositif de mesure à micro-ondes (30, 130) ayant au moins un résonateur à micro-ondes (34, 134), les articles en forme de tige (14) ayant une partie (15) dépassant des renfoncements en forme d'auge (12, 22) respectifs, les parties (15) en dépassement des articles (14) traversant sur leur chemin de transport au moins un canal de passage (40, 140) latéral ouvert d'un côté et s'étendant dans le sens longitudinal, dudit au moins un dispositif de mesure à micro-ondes (30, 130) et traversant sur leur chemin de transport par le canal de passage (40, 140) ledit au moins un résonateur à micro-ondes (34, 134), si bien que les parties (15) en dépassement des articles en forme de tige (14) traversent, sur leur chemin de transport par le canal de passage (40, 140), un champ de mesure à micro-ondes (50, 52, 144) dans ledit au moins un résonateur à micro-ondes (34, 134), les articles en forme de tige (14) traversant le champ de mesure à micro-ondes (50, 52, 144) notamment à une position de consigne des capsules (18), le résonateur à micro-ondes (134) se présentant sous la forme d'un résonateur à guide d'ondes qui est divisé par le canal de passage (140) en deux volumes partiels (136, 136'), l'un (136) des volumes partiels du résonateur à guide d'ondes (134) étant relié à une entrée de micro-ondes (138) et l'autre volume partiel (136') étant relié à une sortie de micro-ondes inductive ou capacitive (139) dont chacune est reliée au résonateur à guide d'ondes (134) par un diaphragme (135, 135'), les volumes partiels (136, 136') étant disposés de façon alignée le long d'une direction principale du résonateur à guide d'ondes et la direction principale étant orientée transversalement à un plan de transport des articles en forme de tige.

12. Procédé selon la revendication 11, **caractérisé en ce que** les parties (15) en dépassement des articles (14) traversent le champ de mesure à micro-ondes (50, 52, 144), notamment avec les positions de consigne des capsules (18), dans une zone du champ de mesure à micro-ondes (50, 52) qui est sensiblement homogène dans l'axe longitudinal des articles (14), notamment dans un ventre d'oscillation du mode d'oscillation de résonateur ajusté.

13. Procédé selon la revendication 11 ou 12, **caractérisé en ce que**, notamment dans un dispositif de mesure à micro-ondes supplémentaire, les parties (15) en dépassement traversent le champ de mesure à micro-ondes (50, 52, 144), notamment avec les positions de consigne des capsules (18), dans un, ou proche d'un, noeud d'oscillation du champ de mesure à micro-ondes (50, 52).

14. Procédé selon l'une des revendications 11 à 13, **caractérisé en ce qu'**un signal de mesure dudit au moins un dispositif de mesure à micro-ondes (30, 130) est exploité relatif à la présence et/ou le remplissage d'une capsule (18) dans un filtre (16).

15. Procédé selon l'une des revendications 11 à 14, **caractérisé en ce que** les signaux de mesure d'au moins un dispositif de mesure à micro-ondes (30, 130) sont exploités relatif à un positionnement d'une capsule (18), notamment à une excentricité d'une position de capsule.

16. Procédé selon l'une des revendications 11 à 15, **caractérisé en ce que** des articles (14) dont les capsules présentent un remplissage ou un positionnement non réglementaire, sont évacués.
